# EUROPÄISCHE PATENTSCHRIFT

(11) **EP 1 606 325 B1**
(45) Veröffentlichungstag und Bekanntmachung des Hinweises auf die Patenterteilung: **05.03.2008**
(21) Anmeldenummer: 03789238.7
(22) Anmeldetag: 12.12.2003
(51) Int. Cl.: C08F 8/00

(54) **VERNETZTE POLYVINYLACETALE**
CROSSLINKED POLYVINLY ACETALS
POLYVINYLACETALS RETICULES

(30) Priorität: 09.01.2003 DE 10300320; 29.04.2003 DE 10319199
(43) Veröffentlichungstag der Anmeldung: 21.12.2005
(73) Patentinhaber: Kuraray Europe GmbH, 65926 Frankfurt am Main (DE)
(72) Erfinder: PAPENFUHS, Bernd, 63179 Obertshausen (DE); STEUER, Martin, 65835 Liederbach (DE); GUTWEILER, Matthias, 65597 Hünfelden (DE)
(74) Vertreter: Kisters, Michael Marcus
(86) Internationale Anmeldenummer: PCT/EP2003/014110
(87) Internationale Veröffentlichungsnummer: WO 2004/063232

(56) Entgegenhaltungen:
- EP-A- 0 211 818
- EP-A- 1 180 529
- US-A- 2 332 899
- US-A- 5 332 774

## Beschreibung

Die vorliegende Erfindung betrifft vernetzte Polyvinylacetale, Verfahren zu ihrer Herstellung sowie ihre Verwendung, insbesondere für Verbundsicherheitsgläser.

Die Modifikation von Polyvinylalkohol mittels Acetalisierung, insbesondere mit n-Butyraldehyd, ist eine seit langem bekannte und genutzte Reaktion. Folien der auf diese Weise erhältlichen Polyvinylacetale, insbesondere Polyvinylbutyrale, werden wegen ihrer hohen Lichtbeständigkeit sowie ihrem sehr guten Klebevermögen als Zwischenschichten in Verbundsicherheitsgläsem, insbesondere in Automobilscheiben (Front- und Seitenscheiben), eingesetzt. Derartige Verbundgläser bieten ein hohes Maß an Sicherheit, da im Falle einer Stoßbeanspruchung die elastische Polyvinylacetalfolie die mechanische Energie absorbiert und die gegebenenfalls entstehenden Glassplitter an der Folie kleben bleiben.

Leider weisen jedoch Verbundsicherheitsgläser auf Basis konventioneller Polyvinylacetal-Typen häufig nur unzureichende mechanische Eigenschaften, insbesondere bei höheren Temperaturen größer 150 °C, auf. Dieses Problem lässt sich auch durch die Verwendung von Polyvinylacetalen mit höheren Molekulargewichten nur schwer lösen, da man an dieser Stelle u. a. aufgrund von Verarbeitungsproblemen (z. B. Blasenbildung, zu hohe oder zu niedrige Viskosität des Polyvinylacetals bei der Verarbeitungstemperatur, fehlende Konstanz der Eigenschaften während der Verarbeitung) meist an die Grenzen des praktisch Machbaren stößt.

Aus diesem Grund schlägt die europäische Patentanmeldung EP 0 211 818 A1 vor, Polyvinylbutyrale einzusetzen, welche unter Verwendung von Aldehyden mit mindestens zwei Aldehydgruppen über intermolekulare Diacetalverknüpfungen vor oder während der Acetalisierungsreaktion des Polyvinylalkohols mit dem Butyraldehyd vernetzt wurden. Diese Art der Vernetzung führt jedoch aufgrund der sehr hohen Reaktivität von Aldehyden zu stark vernetzten, sehr hochmolekularen und daher teilweise unlöslichen Polyvinylbutyralen, welche für die Herstellung von Verbundsicherheitsgläsern hoher Qualität - falls überhaupt - nur begrenzt geeignet sind. Abgesehen davon sind die durch Di- oder Polyaldehyde vernetzten Polyvinylbutyrale unter den Bedingungen der thermoplastischen Verarbeitung des Polymeren (z. B. Extrusion) nicht ausreichend stabil, weshalb in Abhängigkeit von den angewendeten Temperaturen, Verweilzeiten, Scherraten etc. eine mehr oder weniger stark ausgeprägte Spaltung der Vernetzungsstellen (MolekulargewichtsAbbau) erfolgt. Dieser Mangel an thermischer Stabilität erschwert insbesondere die Herstellung reproduzierbarer Produktqualitäten, da das Polymer auf Prozessschwankungen äußerst sensibel reagiert, und führt weiterhin zu einer Verschlechterung der mechanischen Eigenschaften der Polyvinylacetale, insbesondere bei höheren Temperaturen.

In Anbetracht dieses Standes der Technik war es daher ein Aufgabe der vorliegenden Erfindung, Polyvinylacetale mit verbesserten mechanischen Eigenschaften, insbesondere bei höheren Temperaturen, vorzugsweise größer 150 °C, bereitzustellen. Dabei sollten die erfindungsgemäßen Polyvinylacetale insbesondere zur Herstellung von Folien sowie insbesondere zur Herstellung von Verbundsicherheitsgläsern hoher Qualität geeignet sein, und aus diesem Grunde vorzugsweise eine verbesserte Konstanz der Materialeigenschaften, insbesondere der mechanischen Eigenschaften, während der Verarbeitung zu Folien und zu Verbundsicherheitsgläsern aufweisen.

Der vorliegenden Erfindung lag weiterhin die Aufgabe zugrunde, ein Verfahren zur Herstellung der erfindungsgemäßen Polyvinylacetale anzugeben, welches auf einfache Art und Weise, großtechnisch und kostengünstig durchführbar ist.

Eine weitere Aufgabe der vorliegenden Erfindung war auch darin zu erblicken, besonders geeignete Anwendungsgebiete der erfindungsgemäßen Polyvinylacetale aufzuzeigen.

Gelöst werden diese sowie weitere nicht explizit genannte Aufgaben, die jedoch aus den hierin diskutierten Zusammenhängen ohne weiteres ableitbar oder erschließbar sind, durch vernetzte Polyvinylacetale, welche durch ein Herstellverfahren mit allen Merkmalen des vorliegenden Patentanspruchs 1 erhältlich sind. Zweckmäßige Abwandlungen des erfindungsgemäßen Verfahrens werden in den auf Anspruch 1 rückbezogenen Unteransprüchen unter Schutz gestellt. Weiterhin werden die durch das erfindungsgemäße Verfahren erhältlichen Polyvinylacetale sowie für die Anwendung besonders interessante Anwendungsformen und Anwendungsgebiete beansprucht.

Dadurch dass man ein Verfahren zur Herstellung von vernetzten Polyvinylacetalen bereitstellt, bei welchem man ein Polymer (A1) vernetzt, welches, bezogen auf sein Gesamtgewicht,
a.) 1,0 bis 99,9 Gew.-% Struktureinheiten der Formel (1) 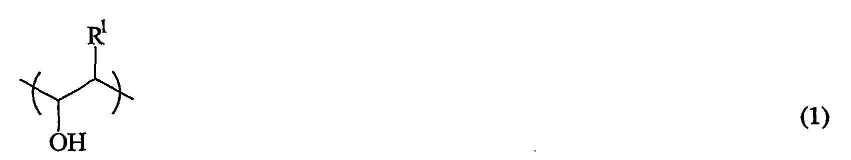 worin R¹ Wasserstoff oder Methyl bedeutet,
b.) 0 bis 99,0 Gew.-% Struktureinheiten der Formel (2) 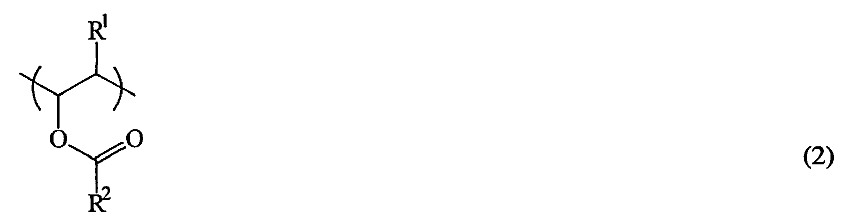 worin R² Wasserstoff oder einen Alkylrest mit 1 bis 6 Kohlenstoffatomen darstellt,
c.) 0 bis 70,0 Gew.-% von Struktureinheiten der Formel (3) 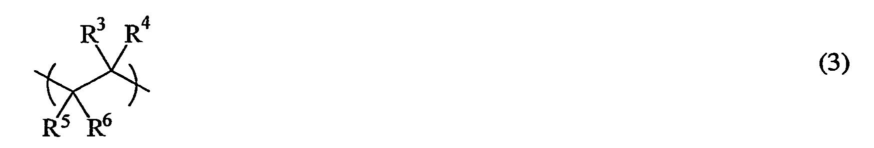 worin R³, R⁴, R⁵ und R⁶, jeweils unabhängig voneinander Reste mit einem Molekulargewicht im Bereich von 1 bis 500 g/mol sind,
d.) 0,00001 bis 30,0 Gew.-% Struktureinheiten der Formel (4) 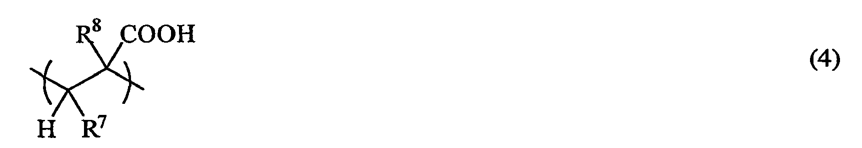 worin R⁷ und R⁸, jeweils unabhängig voneinander, Wasserstoff, eine Carboxylgruppe, eine Alkylgruppe mit 1 bis 10 Kohlenstoffatomen, die gegebenenfalls eine oder mehrere COOH-Gruppen als Substituenten aufweisen kann, oder eine gegebenenfalls substituierte Arylgruppe mit 6 bis 12 Kohlenstoffatomen darstellt,
enthält,
wobei man, in beliebiger Reihenfolge,
(i) das Polymer (A1) mit mindestens einem Polyaldehyd der Formel (5) umsetzt,

   R⁹(CHO)ₙ (5)

   worin R⁹ eine Bindung oder einen 1 bis 40 Kohlenstoffatome aufweisenden Rest darstellt und n eine ganze Zahl größer gleich 2 ist, und
(ii) zumindest teilweise Gruppen der Formel (1) und der Formel (4) miteinander verestert,
gelingt es auf nicht ohne weiteres vorhersehbare Weise, vernetzte Polyvinylacetale zugänglich zu machen, welche insbesondere bei höheren Temperaturen, vorzugsweise größer 150 °C, verbesserte mechanischen Eigenschaften, vor allen einen höheren Speichermodul aufweisen.

Zugleich weisen die erfindungsgemäßen vernetzten Polyvinylacetale eine Reihe weiterer Vorteile auf. Hierzu gehören u. a.:
⇒ Die erfindungsgemäßen Polyvinylacetale zeichnen sich durch eine verbesserte Konstanz ihrer Materialeigenschaften, insbesonderer ihrer mechanischen Eigenschaften, wie beispielsweise ihr Speichermodul, aus. Dieser Vorteil ist insbesondere bei höheren Temperaturen, insbesondere größer 150 °C, zu beobachten. Eine Veränderung der Vernetzungsdichte wie in EP 0 211 818 A1 kann im Rahmen der vorliegenden Erfindung nicht beobachtet werden, im Gegenteil die erfindungsgemäßen Polyvinylacetale weisen eine deutlich verbesserte Konstanz ihrer Vernetzungsdichte auch bei höheren Temperaturen, insbesondere größer 150 °C, auf.
⇒ Die Gegenwart der polymergebundenen Carboxyl- bzw. Carboxylatgruppen in den erfindungsgemäßen Polymeren führt zu einer deutlichen Stabilisierung der über Acetalbrücken entwickelten Verbindungsstellen. Weiterhin erfüllen sie eine Puffer-Funktion und wirken auf diese Weise möglicherweise schädlichen Säure-Einflüssen, beispielsweise durch Hydrolyseprodukte von Antihaftmitteln effektiv entgegen.
⇒ Die erfindungsgemäßen vernetzten Polyvinylacetale können auf einfache Art und Weise großtechnisch und kostengünstig erhalten werden. Dabei werden insbesondere durch die schonenden Vernetzungsbedingungen und die hierfür erforderlichen kurzen Vernetzungszeiten Oxidationsreaktionen und/oder andere thermisch induzierte Nebenreaktionen, welche in der Regel zu einer Verfärbung des Polymers führen und somit insbesondere für die Anwendung als (transparente) Verbundsicherheitsgläser eine Qualitätseinbuße bedeuten würden, vermieden.
⇒ Die Herstellung der erfindungsgemäßen vernetzten Polyvinylacetale kann sehr schnell und schonend erfolgen, so dass aufgrund der bereits zu Anfang hohen Molekulargewichte der Polyvinylacetale sehr kurze Extrusionsstrecken bzw. der Extruderverweilzeiten gewählt werden können.
⇒ Aufgrund ihres charakteristischen Eigenschaftsprofil eignen sich die erfindungsgemäßen Polyvinylacetale insbesondere für Verbundsicherheitsgläser, welche auf einfache Art und Weise, großtechnisch und kostengünstig, insbesondere durch ein Extrusionsverfahren, hergestellt werden können. Dabei kommt in diesem Zusammenhang vor allem der Vorteil zu tragen, dass durch die Verwendung der erfindungsgemäßen Polyvinylacetale sowohl eine Blasenbildung als auch Eigenschaftsschwankungen während der Verarbeitung weitestgehend vermieden werden und auf diese Weise Verbundsicherheitsgläser mit verbesserten optischen und mechanischen Eigenschaften unter hoher Reproduzierbarkeit zugänglich werden.

Die erfindungsgemäßen Polyvinylacetale sind ausgehend von einem Polymer (A1) erhältlich, welches, bezogen auf sein Gesamtgewicht,
a.) 1,0 bis 99,9 Gew.-% Struktureinheiten der Formel (1) 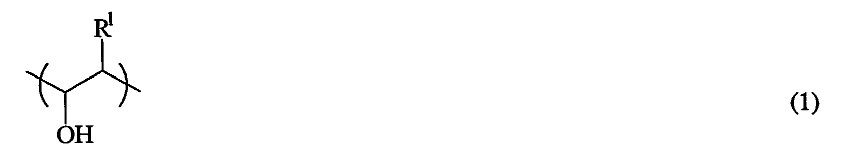
b.) 0 bis 99,0 Gew.-% Struktureinheiten der Formel (2) 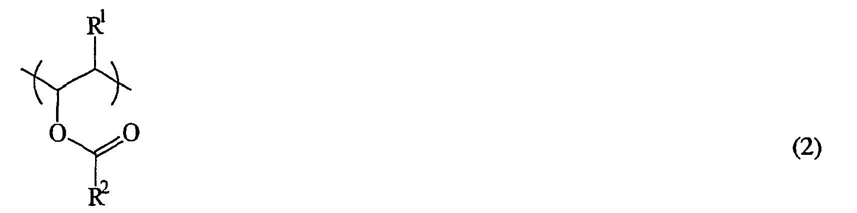
c.) 0 bis 70,0 Gew.-% von Struktureinheiten der Formel (3) 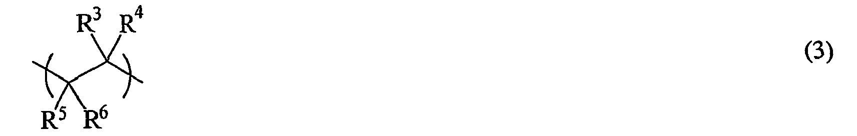
d.) 0,00001 bis 30,0 Gew.-%, vorzugsweise 0,1 bis 30,0 Gew.-%, Struktureinheiten der Formel (4) 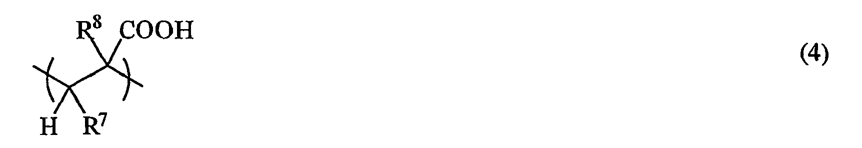
enthält.

Dabei sind die jeweiligen Struktureinheiten natürlich voneinander verschieden, insbesondere umfasst im Rahmen der vorliegenden Erfindung die Struktureinheit der Formel (3) nicht die Struktureinheiten der Formel (1), (2) und/oder (4).

Der Rest R¹ stellt jeweils unabhängig voneinander Wasserstoff oder Methyl, vorzugsweise Wasserstoff, dar.

Der Rest R² kennzeichnet Wasserstoff oder einen Alkylrest mit 1 bis 6 Kohlenstoffatomen, vorzugsweise einen Alkylrest mit 1 bis 6 Kohlenstoffatomen, zweckmäßigerweise eine Methyl-, Ethyl-, n-Propyl-, iso-Propyl-, n-Butyl-, sec-Butyl-, tert-Butyl-, n-Pentyl- oder eine n-Hexylgruppe, vorteilhafterweise eine Methyl- oder eine Ethylgruppe, insbesondere eine Methylgruppe.

Die Reste R³, R⁴, R⁵ und R⁶ sind jeweils unabhängig voneinander Reste mit einem Molekulargewicht im Bereich von 1 bis 500 g/mol, zweckmäßigerweise Wasserstoff, ein gegebenenfalls verzweigter, aliphatischer oder cycloaliphatischer Rest mit 1 bis 16 Kohlenstoffatomen, der gegebenenfalls eine oder mehrere Carbonsäureamid- und/oder Sulfonsäuregruppen enthalten kann.

Der Rest R⁷ ist Wasserstoff, eine Carboxylgruppe (COOH), eine Alkylgruppe mit 1 bis 10 Kohlenstoffatomen, die gegebenenfalls eine oder mehrere COOH-Gruppen als Substituent aufweisen kann, oder eine gegebenenfalls substituierte Arylgruppe mit 6 bis 12 Kohlenstoffatomen, zweckmäßigerweise Wasserstoff oder eine Methyl-, Ethyl-, n-Propyl-, iso-Propyl-, n-Butyl-, sec-Butyl-, tert-Butyl-, n-Pentyl- oder eine n-Hexylgruppe.

Der Rest R⁸ bezeichnet Wasserstoff, eine Carboxylgruppe, eine Alkylgruppe mit 1 bis 10 Kohlenstoffatomen, die gegebenenfalls eine oder mehrere COOH-Gruppen als Substituent aufweisen kann, oder eine gegebenenfalls substituierte Arylgruppe mit 6 bis 12 Kohlenstoffatomen, zweckmäßigerweise Wasserstoff oder eine Methyl-, Ethyl-, n-Propyl-, iso-Propyl-, n-Butyl-, sec-Butyl-, tert-Butyl-, n-Pentyl- oder eine n-Hexylgruppe. Besonders bevorzugte Reste R⁸ umfassen Wasserstoff, eine Methylgruppe und -CH₂COOH.

Besonders bevorzugte Struktureinheiten der Formel (3) leiten sich von geradkettigen oder verzweigten Olefinen mit 2 bis 18 Kohlenstoffatomen, (Meth)acrylamiden und/oder Ethylensulfonsäure ab. Dabei haben sich Olefine, insbesondere solche mit einer endständigen C-C-Doppelbindung, die vorzugsweise 2 bis 6 Kohlenstoffatome aufweisen, insbesondere Ethylen. als ganz besonders günstig erwiesen. Weiterhin führen auch Struktureinheiten (3), die sich von Acrylamidopropenylsulfonsäure (AMPS) ableiten, erfindungsgemäß zu ganz besonders vorteilhaften Ergebnissen.

Besonders bevorzugte Struktureinheiten der Formel (4) leiten sich von (Meth)acrylsäure, Maleinsäure, Maleinsäureanhydrid, Fumarsäure und/oder Itaconsäure ab.

Die Gesamtanzahl an Struktureinheiten der Formel (2) ist vorzugsweise im Bereich von 0,1 bis 40 mol-%, zweckmäßigerweise im Bereich von 0,5 bis 25,0 mol-%, insbesondere im Bereich von 1,0 bis 15,0 mol-%, jeweils bezogen auf die Gesamtanzahl an Struktureinheiten der Formel (1) und (2). Dabei wird gemäß einer ersten bevorzugten Ausführungsform der vorliegenden Erfindung ein Polymer (A1) einsetzt, welches bezogen auf die Gesamtanzahl an Struktureinheiten der Formel (1) und (2) 1,0 bis 2,0 mol-% Struktureinheiten der Formel (2) enthält. Gemäß einer zweiten bevorzugten Ausführungsform der vorliegenden Erfindung wird ein Polymer (A1) einsetzt, welches bezogen auf die Gesamtanzahl an Struktureinheiten der Formel (1) und (2) 3,0 bis 7,0 mol-% Struktureinheiten der Formel (2) enthält. Gemäß einer dritten bevorzugten Ausführungsform der vorliegenden Erfindung wird ein Polymer (A1) einsetzt, welches bezogen auf die Gesamtanzahl an Struktureinheiten der Formel (1) und (2) 10,0 bis 15,0 mol-% Struktureinheiten der Formel (2) enthält.

Gemäß einer weiteren besonders bevorzugten Ausführungsform der vorliegenden Erfindung enthält das Polymer (A1), jeweils bezogen auf sein Gesamtgewicht, > 50,0 Gew.-%, zweckmäßigerweise > 60,0 Gew.-%, vorteilhafterweise > 70,0 Gew.-%, insbesondere > 80,0 Gew.-% an Struktureinheiten der Formel (1) und/oder (2). Besonders vorteilhafte Ergebnisse können dabei mit Polymeren (A1) erzielt werden, die, jeweils bezogen auf ihr Gesamtgewicht, > 85,0 Gew.-%, zweckmäßigerweise > 90,0 Gew.-%, vorteilhafterweise > 95,0 Gew.-%, insbesondere > 99,0 Gew.-% an Struktureinheiten der Formel (1) und/oder (2) enthalten.

Im Rahmen der vorliegenden Erfindung kann das Polymer (A1) einen syndiotaktischen, isotaktischen und/oder ataktischen Kettenaufbau besitzen. Weiterhin kann es sowohl als random- als auch als Blockcopolymer vorliegen.

Die Viskosität des Polymers (A1) ist erfindungsgemäß von untergeordneter Bedeutung, prinzipiell können sowohl niedermolekulare als auch hochmolekulare Polymere (A1) eingesetzt werden. Dennoch hat es sich im Rahmen der vorliegenden Erfindung als ganz besonders günstig erwiesen, dass das Polymer (A1) eine Viskosität im Bereich von 1 bis 70 mPas, vorzugsweise im Bereich von 2 bis 40 mPas, insbesondere im Bereich von 3 bis 30 mPas, aufweist (gemessen als 4 Gew.-%-ige wässrige Lösung nach Höppler bei 20°C, DIN 53015).

Weiterhin unterliegen die Polymers (A1) hinsichtlich ihrem Molekulargewicht keinen besonderen Beschränkungen, für die Zwecke der vorliegenden Erfindung haben sich jedoch Polymere (A1) mit einem Gewichtsmittel des Molekulargewichtes von mindestens 20.000 g/mol ganz besonders bewährt. Dabei wird das Gewichtsmittel des Molekulargewichtes vorzugsweise mittels Gelpermeationschromatographie, zweckmäßigerweise unter Verwendung einer Polyethylenoxid-Kalibrierung, bestimmt.

Die Herstellung der erfindungsgemäß zu verwendenden Polymere (A1) kann auf an sich bekannte Weise in einem zweistufigem Verfahren erfolgen. In einem ersten Schritt wird der entsprechende Vinylester in einem geeigneten Lösungsmittel, in der Regel Wasser oder ein Alkohol, wie Methanol, Ethanol, Propanol und/oder Butanol, unter Verwendung eines geeigneten Radikalstarters, radikalisch polymerisiert. Wird die Polymerisation in der Gegenwart radikalisch copolymerisierbarer Monomere durchgeführt, so erhält man die entsprechenden Vinylester-Copolymere.

Das Vinylester(co)polymer wird dann in einem zweiten Schritt, üblicherweise durch Umesterung mit Methanol, verseift, wobei man den Verseifungsgrad auf an sich bekannte Weise, beispielsweise durch Variation der Katalysatorkonzentration, der Reaktionstemperatur und/oder der Reaktionszeit, gezielt einstellen kann. Für weitere Details wird auf die gängige Fachliteratur, insbesondere auf Ullmann's Encyclopedia of Industrial Chemistry, Fifth Edition on CD-Rom Wiley-VCH, 1997, Keyword: *Poly(Vinyl Acetals)* und die dort angegebenen Literaturstellen verwiesen.

Im Rahmen der vorliegenden Erfindung werden die vernetzten Polyvinylacetale erhalten, indem man, in beliebiger Reihenfolge,
(i) das Polymer (A1) mit mindestens einem Polyaldehyd der Formel (5) umsetzt

   R⁹(CHO)ₙ (5)

   und
(ii) zumindest teilweise Gruppen der Formel (1) und der Formel (4) miteinander verestert.

Dabei bezeichnet R⁹ eine Bindung oder einen 1 bis 40 Kohlenstoffatome aufweisenden Rest, vorzugsweise eine aliphatische, cycloaliphatische und/oder aromatische Gruppe mit zweckmäßigerweise 1 bis 20, bevorzugt 1 bis 12, insbesondere 2 bis 10, Kohlenstoffatomen.

Der Index n ist eine ganze Zahl größer gleich 2, vorzugsweise im Bereich von 2 bis 10, zweckmäßigerweise im Bereich von 2 bis 6, insbesondere 2 oder 3. Gemäß einer ganz besonders bevorzugten Ausführungsform der vorliegenden Erfindung ist n gleich 2.

Erfindungsgemäß ganz besonders geeignete Verbindungen der Formel (5) umfassen Glyoxyl, Propandial, n-Butandial, Glutardialdehyd, n-Hexandial, n-Heptandial, n-Octandial, n-Nonadial, n-Decandial, n-Undecandial, n-Dodecandial, 4,4'-Ethylendioxydibenzaldehyd und 2-Hydroxyhexandial, insbesondere Glutardialdehyd und n-Nonandial.

Die Menge des Polyaldehyds (5) kann im Rahmen der vorliegenden Erfindung prinzipiell beliebig gewählt werden, jedoch hat es sich für die Zwecke der vorliegenden Erfindung ganz besonders bewährt, bezogen auf das Gesamtgewicht an Polymer (A1), 0,001 bis 1,0 Gew.-%, zweckmäßigerweise 0,005 bis 2,0 Gew.-%, insbesondere 0,01 bis 1,0 Gew.-%, Polyaldehyd (5) einzusetzen.

Die Durchführung der Schritte (i) und (ii) kann in beliebiger Reihenfolge erfolgen, d. h. es ist möglich, zunächst Schritt (i) und dann Schritt (ii) oder zunächst Schritt (ii) und dann Schritt (i) oder aber auch gleichzeitig beide Schritte durchzuführen. Jedoch hat es sich für die Zwecke der vorliegenden Erfindung als ganz besonders günstig erwiesen, zunächst Schritt (i) und dann Schritt (ii) durchzuführen.

Im Rahmen einer ganz besonders bevorzugten Ausführungsform der vorliegenden Erfindung gibt man weiterhin zu einem beliebigen Zeitpunkt mindestens eine Verbindung der Formel (6) zu

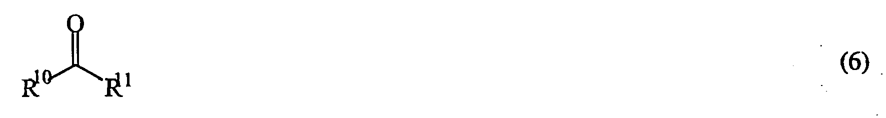

Die Reste R¹⁰ und R¹¹ sind jeweils unabhängig voneinander Wasserstoff, eine Alkylgruppe mit 1 bis 10 Kohlenstoffatomen oder eine Arylgruppe mit 6 bis 12 Kohlenstoffatomen. Dabei können diese Alkyl- und Arylreste mit einer oder mehreren Hydroxyl-, Sulfonsäuregruppen und/oder Halogenatomen, wie Fluor, Chlor, Brom, Iod, substituiert sein. Zu den bevorzugten Verbindungen der Formel (6) gehören Formaldehyd, Acetaldehyd, Propionaldehyd, n-Butyraldehyd, iso-Butyraldehyd, 2-Ethoxybutyraldehyd, Paraldehyd, 1,3,5-Trioxan, Capronaldehyd, 2-Ethylhexanal, Pelargonaldehyd, 3,5,5-Trimethylhexanal, 2-Formyl-benzoesulfonsäure, Aceton, Ethylmethylketon, Butylethylketon und/oder Ethylhexylketon.

Im Rahmen der vorliegenden Erfindung hat sich der Einsatz von Aldehyden, d. h. von Verbindungen der Formel (6) mit R¹⁰ = Wasserstoff und R¹¹ = Wasserstoff, eine Methyl-, Ethyl-, n-Propyl- oder eine iso-Propylgruppe, vorzugsweise von Formaldehyd und/oder n-Butyraldehyd, insbesondere von n-Butyraldehyd, ganz besonders bewährt.

Das Verhältnis der Komponenten (5) und (6) wird vorzugsweise folgendermaßen gewählt
(1) 95,00 bis 99,99 Gewichtsteile mindestens einer Verbindung (6)
(2) 0,01 bis 5,00 Gewichtsteile mindestens eines Polyaldehyds (5),
wobei sich die angegebenen Gewichtsteile vorzugsweise zu 100,00 Gewichtsteilen ergänzen.

Die Umsetzung des Polymers (A1) mit der Verbindung (5) und/oder (6) erfolgt vorzugsweise in mindestens einem inerten Lösungsmittel, wobei der Begriff "inertes Lösungsmittel" für solche Lösungsmittel steht, die unter den jeweiligen Reaktionsbedingungen nicht den Ablauf der gewünschten Reaktion stören bzw. gar verhindern. Ein in diesem Zusammenhang besonders zweckmäßiges Lösungsmittel ist Wasser.

Weiterhin führt man die Reaktion günstigerweise in Gegenwart saurer Katalysatoren durch. Geeignete Säuren umfassen sowohl organische Säuren, wie beispielsweise Essigsäure als auch mineralische Säuren, wie Salzsäure, Schwefelsäure und/oder Salpetersäure, wobei sich der Einsatz von Salzsäure, Schwefelsäure und/oder Salpetersäure in der Technik besonders bewährt hat. Die Durchführung der Reaktion erfolgt vorzugsweise derart, dass man das Polymer (A1) in wässeriger Lösung vorlegt, die Verbindung (5) und/oder (6) in diese Lösung einträgt und anschließend den sauren Katalysator zutropft.

Die Veresterung (ii) kann auf an sich bekannte Weise erfolgen, wobei es sich jedoch im Rahmen der vorliegenden Erfindung als ganz besonders günstig erwiesen hat, die Vernetzung, gegebenenfalls in Gegenwart mindestens eines Weichmachers, bei Massetemperaturen im Bereich von 80 bis 280°C, vorzugsweise im Bereich von 120 bis 280°C, insbesondere im Bereich von 140 bis 260°C, thermisch durchzuführen.

Die thermische Vernetzung des Polyvinylacetals kann dabei mit allen dem Fachmann bekannten beheizbaren Aggregaten, wie z.B. Öfen, Knetern, Extrudern, Pressen oder Autoklaven durchgeführt werden. Bevorzugt erfolgt die thermische Vernetzung jedoch in Extrudern oder in Knetaggregaten, da diese eine gute Homogenisierung mit dem/den Weichmachern, der/die in einer bevorzugten Ausführungsform enthalten ist/sind, gewährleisten. Die Vernetzung ist dabei erkennbar an dem im Vergleich zum unvernetzten Polyvinylacetal höheren Molekulargewicht des vernetzten Polyvinylacetals.

Der Grad der Vernetzung kann - je nach Anwendung - frei gewählt werden. Dennoch hat es sich im Rahmen der vorliegenden Erfindung als ganz besonders zweckmäßig erwiesen, dass mindestens 10 mol-%, vorzugsweise mindestens 20 mol-%, zweckmäßigerweise mindestens 30 mol-%, insbesondere mindestens 40 mol-% , aller ursprünglich im Polyvinylacetal enthaltenen Carboxylgruppen verestert werden. Dabei ist der Gehalt an Carboxylgruppen, bezogen auf das Gesamtgewicht des vernetzten Polyvinylacetals, vorzugsweise kleiner gleich 10,0 Gew.-% und liegt vorzugsweise im Bereich von 0,00001 bis 10,0 Gew.-%, besonders bevorzugt im Bereich von 0,001 bis 10,0 Gew.-%, zweckmäßigerweise im Bereich von 0,01 bis 5,0 Gew.-% und insbesondere im Bereich von 0,01 bis 2,0 Gew.-%.

Die erfindungsgemäßen, vernetzten Polyvinylacetale enthalten in einer bevorzugten Ausführungsform Weichmacher. Als Weichmacher können dabei alle dem Fachmann bekannten Weichmacher eingesetzt werden. Der Weichmacher wird dabei in üblichen Mengen eingesetzt, die dem Fachmann bekannt sind. Bekannte Weichmacher für Polyvinylacetale , insbesondere für Polyvinylbutyrale sind dabei die Ester aliphatischer Mono- und Dicarbonsäuren mit ein- oder mehrwertigen Alkoholen bzw. Oligoalkylen-Glykolethern, Phosphorsäureester sowie verschiedene Phthalate, wie sie zum Beispiel in der US-A-5 137 954 offenbart werden. Vorzugsweise eingesetzt werden jedoch die Diester von Di-, Tri- und Tetraethylenglykolen mit aliphatischen Monocarbonsäuren, Adipinsäure-Dialkylester sowie die in der nichtvorveröffentlichten DE-A-101 00 681 beschriebenen Dibenzoate von Alkylen- und Polyalkylenglykolen.

Mögliche Einsatzgebiete der erfindungsgemäßen vernetzten Polyvinylacetale sind dem Fachmann offensichtlich. Sie eignen sich insbesondere für alle Anwendungen, die für vernetzte Polyvinylacetale, insbesondere für Polyvinylformale und/oder Polyvinylbutyrale vorgezeichnet sind. Besonders bevorzugte Anwendungsgebiete umfassen ihre Verwendung als Folien, insbesondere für Verbundgläser, welche vorzugsweise durch direkte Extrusion mit Hilfe von Breitschlitzdüsen hergestellt werden können. Weitere Details zur Extrusion von Polyvinylacetalen und zur Herstellung von Polyvinylacetal-, insbesondere von Polyvinalbutyral-Folien, sind dem Fachmann aus der Fachliteratur hinlänglich bekannt.

Ein im Rahmen der vorliegenden Erfindung besonders bevorzugtes Anwendungsgebiet der erfindungsgemäßen Polyvinylacetale sind Flächengebilde, insbesondere Folien, vorzugsweise mit einer Dicke im Bereich von 0,5 µm bis 1 mm. Die erfindungsgemäßen Folien können dabei weitere, übliche Zusätze, wie z.B. Oxidationsstabilisatoren, UV-Stabilisatoren, Farbstoffe, Füllstoffe, Pigmente und/oder Antihaftmittel enthalten.

Darüber hinaus sind die erfindungsgemäßen Polyvinylacetale auch für die Beschichtung von Substraten, insbesondere von Holz, Metall, Kunststoff, Glas, Textilien, Papier, Leder sowie keramischen und mineralischen Untergründen, besonders geeignet. Gegenstand der vorliegenden Erfindung sind daher auch Beschichtungen enthaltend die erfindungsgemäßen Polyvinylacetale.

Die Beschichtungen können weiterhin Polymerharze, Weichmacher, Pigmente, Füllstoffe, Stabilisatoren, Haftungsverbesserer, rheologische Hilfsmittel, den pH-Wert beeinflussende Additive und/oder Additive, die chemische Reaktionen sowohl zwischen dem erfindungsgemäßen Polyvinylacetal und anderen Polymerharzen als auch zwischen den anderen Polymerharzen untereinander katalysieren, enthalten.

Die erfindungsgemäße Beschichtung kann auf an sich bekannte Weise sowohl als Pulver, das anschließend vorzugsweise bei erhöhter Temperatur aufgeschmolzen und vernetzt wird, als auch aus vorzugsweise organischer Lösung mittels dem Fachmann bekannten Beschichtungsverfahren erfolgen. Dabei wird beim Aufbringen aus Lösung vorzugsweise das erfindungsgemäß zu vernetzende Polyvinylacetal, gegebenenfalls zusammen mit weiteren Bindemitteln sowie gegebenenfalls anderen Bestandteilen, wie beispielsweise Weichmachern, Pigmenten, Füllstoffen, Stabilisatoren, Haftungsverbesserern, rheologischen Hilfsmitteln, im Lösemittel oder Lösemittelgemisch gelöst und dann auf das zu beschichtende Substrat aufgebracht. Die erfindungsgemäße Vernetzung erfolgt vorzugsweise nach Abdampfen des Lösungsmittels, zweckmäßigerweise bei einer Temperatur im Bereich von 20 bis 200 °C. Dabei wird die Vernetzungsreaktion günstigerweise durch pH-Wert senkende Additive, wie beispielsweise organische und/oder anorganische Säuren, unterstützt.

Bei Anwendung in Beschichtungen zeigt sich die Vernetzung in einer Zunahme der Lösungsmittelbeständigkeit der Beschichtung sowie einer Zunahme des Molekulargewichts im Vergleich zum unvernetzten Polyvinylacetal.

Gemäß einem weiteren Aspekt der vorliegenden Erfindung eignen sich die erfindungsgemäßen Polyvinylacetale insbesondere auch zur Herstellung ionenleitfähiger Zwischenschichten für elektrochrome Systeme.

## Patentansprüche

1. Verfahren zur Herstellung von vernetzten Polyvinylacetalen, bei welchem man ein Polymer (A1) vernetzt, welches, bezogen auf sein Gesamtgewicht,
a.) 1,0 bis 99,9 Gew.-% Struktureinheiten der Formel (1) 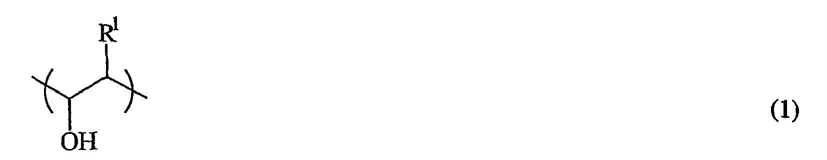 worin R¹ Wasserstoff oder Methyl bedeutet,
b.) 0 bis 99,0 Gew.-% Struktureinheiten der Formel (2) 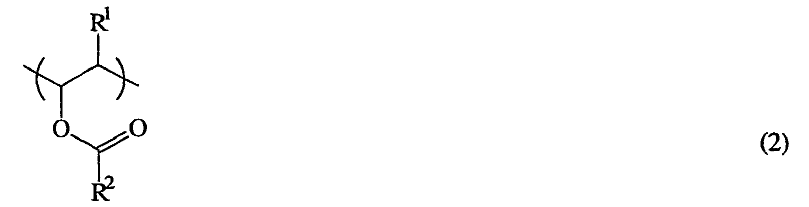 worin R² Wasserstoff oder einen Alkylrest mit 1 bis 6 Kohlenstoffatomen darstellt,
c.) 0 bis 70,0 Gew.-% von Struktureinheiten der Formel (3) 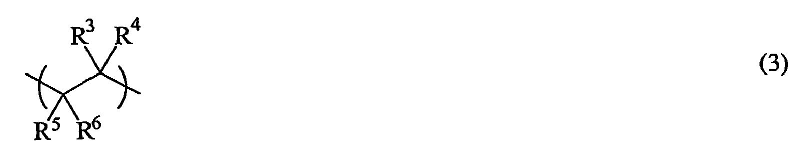 worin R³, R⁴, R⁵ und R⁶, jeweils unabhängig voneinander Reste mit einem Molekulargewicht im Bereich von 1 bis 500 g/mol sind,
d.) 0,00001 bis 30,0 Gew.-% Struktureinheiten der Formel (4) 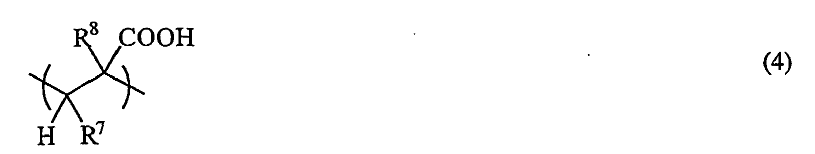 worin R⁷ und R⁸, jeweils unabhängig voneinander, Wasserstoff, eine Carboxylgruppe, eine Alkylgruppe mit 1 bis 10 Kohlenstoffatomen, die gegebenenfalls eine oder mehrere COOH-Gruppen als Substituenten aufweisen kann, oder eine gegebenenfalls substituierte Arylgruppe mit 6 bis 12 Kohlenstoffatomen darstellt,
enthält,
**dadurch gekennzeichnet, dass** man, in beliebiger Reihenfolge,
(i) das Polymer (A1) mit mindestens einem Polyaldehyd der Formel (5) umsetzt,
R⁹(CHO)ₙ (5)
worin R⁹ eine Bindung oder einen 1 bis 40 Kohlenstoffatome aufweisenden Rest darstellt und n eine ganze Zahl größer gleich 2 ist,
und
(ii) zumindest teilweise Gruppen der Formel (1) und der Formel (4) miteinander verestert.

2. Verfahren nach mindestens einem der vorangehenden Ansprüche, **dadurch gekennzeichnet, dass** man eine Verbindung (5) mit n = 2 oder 3 einsetzt.

3. Verfahren nach mindestens einem der vorangehenden Ansprüche, **dadurch gekennzeichnet, dass** man eine Verbindung (5) einsetzt, bei R⁹ eine aliphatische, cycloaliphatische und/oder aromatische Gruppe mit 1 bis 12 Kohlenstoffatomen ist.

4. Verfahren nach mindestens einem der vorangehenden Ansprüche, **dadurch gekennzeichnet, dass** man Glutardialdehyd und/oder n-Nonandial als Verbindung (5) einsetzt.

5. Verfahren nach mindestens einem der vorangehenden Ansprüche, **dadurch gekennzeichnet, dass** man zu einem beliebigen Zeitpunkt mindestens eine Verbindung der Formel (6) zugibt, 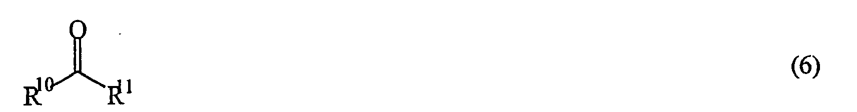 worin R¹⁰ und R¹¹ jeweils unabhängig voneinander Wasserstoff, eine Alkylgruppe mit 1 bis 10 Kohlenstoffatomen oder eine gegebenenfalls substituierte Arylgruppe mit 6 bis 12 Kohlenstoffatomen sind.

6. Verfahren nach Anspruch 5, **dadurch gekennzeichnet, dass** man n-Butyraldehyd als Verbindung (6) einsetzt.

7. Verfahren nach Anspruch 5 und/oder 6, **dadurch gekennzeichnet, dass** man
(1) 95,00 bis 99,99 Gewichtsteile mindestens einer Verbindung (6)
(2) 0,01 bis 5,00 Gewichtsteile mindestens eines Polyaldehyds (5)
einsetzt, wobei sich die angegebenen Gewichtsteile zu 100,00 Gewichtsteilen ergänzen.

8. Verfahren nach mindestens einem der vorangehenden Ansprüche, **dadurch gekennzeichnet, dass** man die Veresterung (ii), gegebenenfalls in Gegenwart mindestens eines Weichmachers, bei Massetemperaturen im Bereich von 80 bis 280°C durchführt.

9. Verfahren gemäß Anspruch 8, **dadurch gekennzeichnet, dass** die Vernetzung in einem Extruder, Knetaggregat oder einem anderen beheizbaren Aggregat durchgeführt wird.

10. Vernetztes Polyvinylacetal erhältlich durch ein Verfahren gemäß mindestens einem der vorangehenden Ansprüche.

11. Polyvinylacetal gemäß Anspruch 10, **dadurch gekennzeichnet, dass** dessen Gesamtgehalt an veresterten und nicht-veresterten Carboxylgruppenkleiner gleich 10,0 Gew.-%, bezogen auf das Gesamtgewicht des Polyvinylacetals, ist.

12. Polyvinylacetal gemäß Anspruch 10 und/oder 11, **dadurch gekennzeichnet, dass** es Weichmacher enthält.

13. Formmasse enthaltend ein Polyvinylacetal gemäß mindestens einem der Ansprüche 10 bis 12.

14. Folie enthaltend ein Polyvinylacetal gemäß mindestens einem der Ansprüche 10 bis 12.

15. Verwendung einer Folie gemäß Anspruch 14 zur Herstellung von Verbundsicherheitsgläsern.

16. Beschichtung enthaltend ein Polyvinylacetal gemäß mindestens einem der Ansprüche 10 bis 12.

17. Verwendung eines Polyvinylacetals gemäß mindestens einem der Ansprüche 10 bis 12 zur Herstellung ionenleitfähiger Zwischenschichten für elektrochrome Systeme.

## Claims

1. Process for the production of crosslinked polyvinyl acetals in which a polymer (AI) is crosslinked which, based on its total weight,
a.) contains 1.0 to 99.9 % by wt. of structural units with the formula (1) 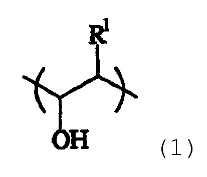 in which R¹ represents hydrogen or methyl,
b.) 0 to 99.0 % by wt. of structural units with the formula (2) 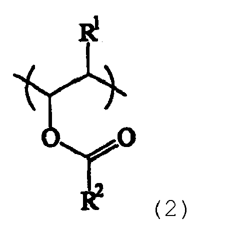 in which R² represents hydrogen or an alkyl radical with 1 to 6 carbon atoms,
c.) 0 to 70.0 % by wt. of structural units with the formula (3) 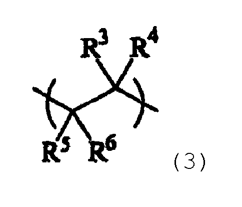 in which R³, R⁴, R⁵ and R⁶ represent, independently of each other, radicals with a molecular weight in the region of 1 to 500 g/mole,
d.) 0.00001 to 30.0 % by wt. of structural units with the formula (4) 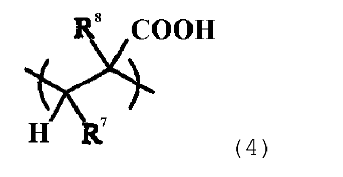 in which R⁷ and R⁸, represent independently of each other, hydrogen, a carboxyl group, an alkyl group with 1 to 10 carbon atoms which, optionally, may exhibit one or several COOH groups as substituents or represents an optionally substituted aryl group with 6 to 12 carbon atoms,
**characterised in that**, in any sequence,
(i) the polymer (A) is reacted with at least one polyaldehyde with the ^ formula (5)
R⁹(CHO)ₙ,
in which R⁹ is a bond or a radical exhibiting 1 to 40 carbon atoms and n is an integer of more than 2, and
(ii) at least partially groups with the formula (1) and the formula (4) are esterified with each other.

2. Process according to at least one of the preceding claims **characterised in that** a compound (5) with n = 2 or 3 is used.

3. Process according to at least one of the preceding claims **characterised in that** a compound (5) is used in which R⁹ is an aliphatic, cycloaliphatic and/or aromatic group with a to 12 carbon atoms.

4. Process according to at least one of the preceding claims **characterised in that** glutardialdehyde and/or n-nonane dial is used as compound (5).

5. Process according to at least one of the preceding claims **characterised in that** at any desired point in time at least one compound with the formula (6) is added 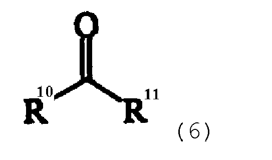 in which R¹⁰ and R¹¹ are independently of each other, hydrogen, an alkyl group with 1 to 10 carbon atoms or, optionally, a substituted aryl group with 6 to 12 carbon atoms.

6. Process according to claim 5 **characterised in that** n-butyraldehyde is used as compound (6).

7. Process according to claim 5 and/or 6 **characterised in that**
(1) 95.00 to 99.99 parts by weight of at least one compound (6)
(2) 0.01 to 5.00 parts by weight of at least one polyaldehyde (5) are used, the parts by weight indicated making 100,000.

8. Process according to at least one of the preceding claims **characterised in that** the esterification (ii) is optionally carried out in the presence of at least one plasticizer at mass temperatures in the region of 80 to 280 °C.

9. Process according to claim 8 **characterised in that** crosslinking is carried out in an extruder, a kneading device or another heatable device.

10. Crosslinked polyacetal obtainable by a process according to at least one of the preceding claims.

11. Polyvinyl acetal according to claim 10 **characterised in that** its total content of esterified and non-esterified carboxyl groups is less than/equal to 10.0 % by weight, based on the total weight of the polyvinyl acetal.

12. Polyvinyl acetal according to claim 10 and/or 11 **characterised in that** it contains plasticiser.

13. Moulding compound containing a polyvinyl acetal according to at least one of claims 10 to 12.

14. Film containing a polyvinyl acetal according to at least one of claims 10 to 12.

15. Use of a film according to claim 14 for the production of composite safety glass.

16. Coating containing a polyvinyl acetal according to at least one of claims 10 to 12.

17. Use of a polyvinyl acetal according to at least one of claims 10 to 12 for the production of ion conductive intermediate layers for electrochrome systems.

## Revendications

1. Procédé de préparation d'acétals de polyvinyle réticulés lors duquel on procède à la réticulation d'un polymère (A1) contenant, par rapport à son poids total,
a.) 1,0 à 99,9 % en poids d'unités structurelles selon la formule (1), 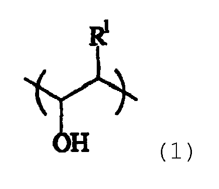 dans laquelle R¹ représente un hydrogène ou un groupe méthyle,
b.) 0 à 99,0 % en poids d'unités structurelles selon la formule (2), 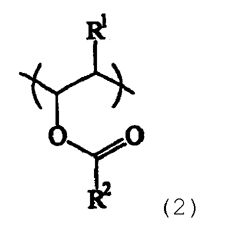 dans laquelle R² représente un hydrogène ou un groupe alkyle renfermant 1 à 6 atomes de carbone,
c.) 0 à 70,0 % en poids d'unités structurelles selon la formule (3), 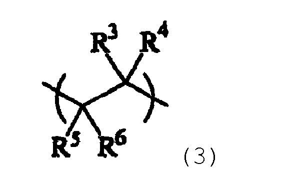 dans laquelle R³, R⁴, R⁵ et R⁶ représentent indépendamment l'un de l'autre des restes ayant une masse moléculaire comprise entre 500 et g/mol,
d.) 0,00001 à 30,0 % en poids d'unités structurelles selon la formule (4), 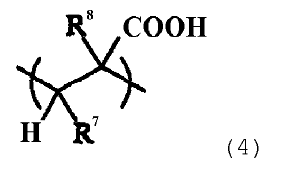 dans laquelle R⁷ et R⁸ représentent indépendamment l'un de l'autre un hydrogène, un groupe carboxyle, un groupe alkyle pouvant le cas échéant être substitué par un ou plusieurs groupes COOH et renfermant 1 à 10 atomes de carbone ou un groupe aryle le cas échéant substitué qui renferme 6 à 12 atomes de carbone,
**caractérisé en ce que** l'on
(i) fait réagir le polymère (A1) avec au moins un polyaldéhyde de formule (5),
R⁹(CHO)ₙ (5)
dans laquelle R⁹ représente une liaison ou un reste renfermant 1 à 40 atomes de carbone et n est un nombre entier égal ou supérieur à 2,
(ii) procède à une estérification au moins partielle des groupes de la formule (1) avec ceux de la formule (4),
les étapes ci-dessus pouvant être réalisées dans un quelconque ordre.

2. Procédé selon au moins une des revendications précédentes, **caractérisé en ce que** l'on met en oeuvre un composé (5) dans lequel n est égal à 2 ou 3.

3. Procédé selon au moins une des revendications précédentes, **caractérisé en ce que** l'on met en oeuvre un composé (5) dans lequel R⁹ est un groupe aliphatique, cycloaliphatique et/ou aromatique renfermant 1 à 12 atomes de carbone.

4. Procédé selon au moins une des revendications précédentes, **caractérisé en ce que** l'on met en oeuvre du glutardialdéhyde et/ou du n-nonandial en tant que composé (5).

5. Procédé selon au moins une des revendications précédentes, **caractérisé en ce que** l'on ajoute, à un quelconque moment, au moins un composé de formule (6), 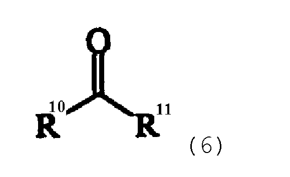 dans laquelle R¹⁰ et R¹¹ représentent indépendamment l'un de l'autre un hydrogène, un groupe alkyle renfermant 1 à 10 atomes de carbone ou un groupe aryle le cas échéant substitué qui renferme 6 à 12 atomes de carbone.

6. Procédé selon la revendication 5, **caractérisé en ce que** l'on met en oeuvre du n-butyraldéhyde en tant que composé 6.

7. Procédé selon les revendications 5 et/ou 6, **caractérisé en ce que** l'on met en oeuvre
(1) 95,00 à 99,99 parts en poids d'au moins un composé (6)
(2) 0,01 à 5,00 parts en poids d'au moins un polyaldéhyde (5), les parts en poids indiquées devant se compléter de manière à donner 100,00 parts en poids.

8. Procédé selon au moins une des revendications précédentes, **caractérisé en ce que** l'on réalise l'estérification (ii) le cas échéant en présence d'au moins un plastifiant, les températures de la masse étant comprises entre 80 et 280 °C.

9. Procédé selon la revendication 8, **caractérisé en ce que** la réticulation est réalisée dans un extrudeuse, un malaxeur ou un autre appareillage pouvant être chauffé.

10. Acétal de polyvinyle réticulé pouvant être obtenu par un procédé selon au moins une des revendications précédentes.

11. Acétal de polyvinyle selon la revendication 10, **caractérisé en ce que** sa teneur globale en groupes carboxyle estérifiés et non-estérifiés est égale ou inférieure à 10 % en poids, exprimée par rapport au poids total de l'acétal de polyvinyle.

12. Acétal de polyvinyle selon les revendications 10 et/ou 11, **caractérisé en ce qu'**il contient des plastifiants?

13. Masse moulable contenant un acétal de polyvinyle selon au moins une des revendications 10 à 12.

14. Feuille contenant un acétal de polyvinyle selon au moins une des revendications 10 à 12.

15. Utilisation d'une feuille selon la revendication 14 pour fabriquer des verres de sécurité feuilletés.

16. Revêtement contenant un acétal de polyvinyle selon au moins une des revendications 10 à 12.

17. Utilisation d'un acétal de polyvinyle selon au moins une des revendications 10 à 12 pour préparer des couches intermédiaires conductrices d'ions destinées à des systèmes électrochromes.
